# EUROPÄISCHE PATENTSCHRIFT

(11) **EP 1 536 113 B1**
(45) Veröffentlichungstag und Bekanntmachung des Hinweises auf die Patenterteilung: **13.08.2008**
(21) Anmeldenummer: 04105619.3
(22) Anmeldetag: 09.11.2004
(51) Int. Cl.: F01N 3/28, F01N 1/04

(54) **Schalldämpfer mit integriertem Katalysator**
Exhaust gas silencer with integrated catalyst
Silencieux d'échappement avec catalyseur intégré

(30) Priorität: 27.11.2003 DE 10356000
(43) Veröffentlichungstag der Anmeldung: 01.06.2005
(73) Patentinhaber: J. Eberspächer GmbH & Co. KG, 73730 Esslingen (DE)
(72) Erfinder: Wörner, Siegfried, 73734, Esslingen (DE); Buhmann, Rudolf, 73732, Esslingen (DE); Werni, Marcus, 71384, Weinstadt-Schnait (DE)
(74) Vertreter: Bongen, Renaud & Partner

(56) Entgegenhaltungen:
- EP-A- 0 816 648
- WO-A-02/077425
- DE-A1- 4 431 484
- DE-A1- 19 952 428

## Beschreibung

Die vorliegende Erfindung betrifft einen Schalldämpfer mit integriertem Katalysator für einen Abgasstrang einer Brennkraftmaschine, insbesondere in einem Kraftfahrzeug, mit den Merkmalen des Oberbegriffs des Anspruchs 1.

Aus der WO 02/077425 A1 ist ein Schalldämpfer mit integriertem Katalysator für einen Abgasstrang einer Brennkraftmaschine, insbesondere in einem Kraftfahrzeug bekannt. Der bekannte Schalldämpfer umfasst ein Gehäuse, das eingangsseitig ein Einlassrohr mit einem im Inneren des Gehäuse angeordneten Trichter und ausgangsseitig ein Auslassrohr aufweist. Im Gehäuse sind ein Katalysatorelement und stromab davon ein Partikelfilterelement angeordnet. Katalysatorelement und Partikelfilterelement sind somit in Reihe durchströmbar. Das Katalysatorelement ist dabei mit einem Eintrittsende in einer Eintrittskammer und mit einem Austrittsende in einer Austrittskammer angeordnet. Mit dieser Eintrittskammer kommuniziert ein Austrittsende des Einlasstrichters. Ferner ist die Eintrittskammer nach außen sowie gegenüber dem Einlasstrichter und dem Katalysatorelement soweit abgedichtet, dass im Betrieb der Brennkraftmaschine Abgas, das durch den Einlasstrichter in die Eintrittskammer gelangt, die Eintrittskammer ausschließlich durch das Katalysatorelement verlässt.

Ein weiterer Schalldämpfer mit integriertem Katalysator ist aus der DE 44 31 484 A1 bekannt. Dieser Schalldämpfer umfasst ein Gehäuse mit einem eingangsseitigen Einlasstrichter, der im Gehäuse unmittelbar in einen Rohrabschnitt übergeht, der mit Hilfe eines Katalysatorelements in eine Eintrittskammer und eine Austrittskammer unterteilt ist.

Ein Abgasstrang einer Brennkraftmaschine wird regelmäßig mit wenigstens einem Schalldämpfer versehen, um die Geräuschemission der Brennkraftmaschine durch den Abgasstrang zu reduzieren. Des Weiteren wird im Abgasstrang der Brennkraftmaschine regelmäßig zumindest ein Katalysator angeordnet, um die Schadstoffemissionen der Brennkraftmaschine zu reduzieren. Für die Unterbringung der einzelnen Komponenten des Abgasstrangs steht insbesondere bei Kraftfahrzeugen häufig wenig Bauraum zur Verfügung. Dabei ist es grundsätzlich möglich, einen Katalysator raumsparend innerhalb eines Schalldämpfers anzuordnen. Zweckmäßig kann es sich dabei um einen Katalysator handeln, der in einer an sich bestehende Abgasanlage zusätzlich eingebaut werden soll, wie z.B. ein sogenannter SCR-Katalysator. Mit Hilfe eines derartigen SCR-Katalysators können NOₓ-Anteile der Abgase zu H₂O und N₂ reduziert werden, wenn stromauf des SCR-Katalysators Harnstoff oder Ammoniak geregelt eindosiert wird.

Die vorliegende Erfindung beschäftigt sich mit dem Problem, für einen Schalldämpfer der eingangs genannten Art eine verbesserte Ausführungsform anzugeben, bei der insbesondere die Effizienz des integrierten Katalysators verbessert ist.

Dieses Problem wird erfindungsgemäß durch den Gegenstand des unabhängigen Anspruches gelöst. Vorteilhafte Ausführungsformen sind Gegenstand der abhängigen Ansprüche.

Die vorliegende Erfindung beruht auf dem allgemeinen Gedanken, eine Eintrittskammer, in welche die dem Schalldämpfer zugeführten Abgase eintreten und von welcher die Abgase in wenigstens zwei Katalysatorelemente eintreten, im Übrigen hermetisch abzudichten. Auf diese Weise können die Abgase die Eintrittskammer nur durch die wenigstens zwei Katalysator-elemente verlassen. Insbesondere wird dadurch eine Umströmung bzw. ein Bypass der wenigstens zwei Katalysatorelemente vermieden. Durch die erfindungsgemäße Bauweise wird somit eine leckagefreie Eintrittskammer bereit gestellt, wodurch die Abgasströmung zwangsläufig durch die wenigstens zwei Katalysatorelemente hindurch geführt wird. Auf diese Weise ist sichergestellt, dass in dem wenigstens zwei Katalysatorelementen eine möglichst hohe Konversion der Schadstoffe erfolgen kann. Die Effektivität des in den Schalldämpfer integrierten Katalysators wird dadurch erheblich verbessert. Der erfindungsgemäße Schalldämpfer unterscheidet sich somit grundsätzlich von herkömmlichen Schalldämpfern, bei denen eine hermetische Abdichtung des Eintrittsbereichs nicht erforderlich ist.

Bei der Erfindung ist die Eintrittskammer entweder in einem Eintrittskammergehäuse ausgebildet, das als separates Bauteil in das Gehäuse des Schalldämpfers eingesetzt ist, oder durch einen das Austrittsende des Einlasstrichters enthaltenden Abschnitt des Einlasstrichters gebildet. Ein derartiges separates Eintrittskammergehäuse lässt sich einfach vorfertigen und mit der erforderlichen Dichtigkeit versehen. Durch die Integration der Eintrittskammer in den Einlasstrichter ergibt sich ebenfalls die Möglichkeit, die Eintrittskammer mit dem Einlasstrichter einfach vorzufertigen und mit der erforderlichen Dichtigkeit zu versehen. Für den Schalldämpfer ergibt sich somit eine vereinfachte Bauweise bei verbesserter Dichtungswirkung.

Innerhalb des Gehäuses verläuft ein Auslaßrohr, das an der Ausgangsseite des Gehäuses aus diesem herausgeführt ist. Gemäß einer bevorzugten Ausführungsform erstreckt sich dieses Auslaßrohr im Gehäuse innerhalb einer anderen Ebene als die wenigstens zwei Katalysatorelemente. Auf diese Weise ergibt sich eine vereinfachte Bauweise für den Schalldämpfer, da das Auslaßrohr in der ihm zugeordneten Ebene beliebig, also unabhängig von dem wenigstens zwei Katalysatorelemente im Gehäuse verlegt werden kann. Auf diese Weise kann insbesondere für das Auslaßrohr eine erforderliche große Länge innerhalb des Gehäuses erzielt werden, die für eine gewünschte Schalldämpfungswirkung besonders vorteilhaft ist.

Während bei einem herkömmlichen Schalldämpfer ein Einlaßboden oder ein Auslaßboden durch Bördelung oder durch einzelne Schweißpunkte mit einem Mantel des Gehäuses verbunden ist, kann die Eintrittskammer bei einer bevorzugten Ausführungsform der vorliegenden Erfindung mittels Lötverbindungen und/oder Schweißverbindungen abgedichtet sein, die den Ein-und/oder jedes Katalysatorelement und/oder die Eintrittskammer gegenüber dem Gehäuse ringförmig umschließen. Die Abdichtung der Eintrittskammer wird hier durch eine aufwendigere Verbindungstechnik realisiert, wodurch die verwendete Verbindung jedoch eine Doppelfunktion erhält, sodass der Schalldämpfer insgesamt wirtschaftlich herstellbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, wie sie in den beigefügten Ansprüchen beansprucht ist.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1 bis 3: jeweils einen Längsschnitt durch einen Schalldämpfer nach der Erfindung, bei unterschiedlichen Ausführungsformen,
- Fig. 4: einen Querschnitt durch den Schalldämpfer,
- Fig. 5: eine Schnittansicht entsprechend den Schnittlinien V in Fig. 4 des Schalldämpfers.

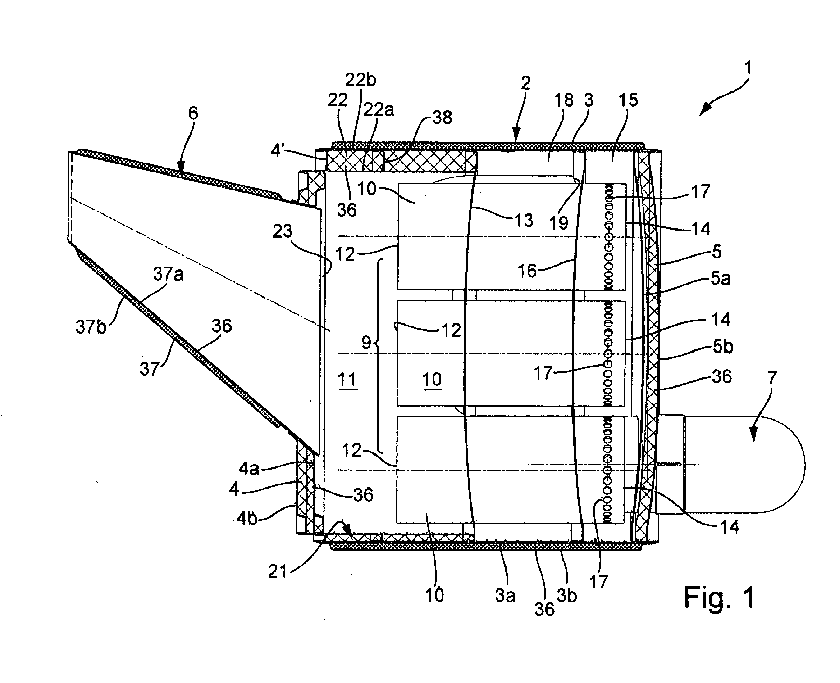

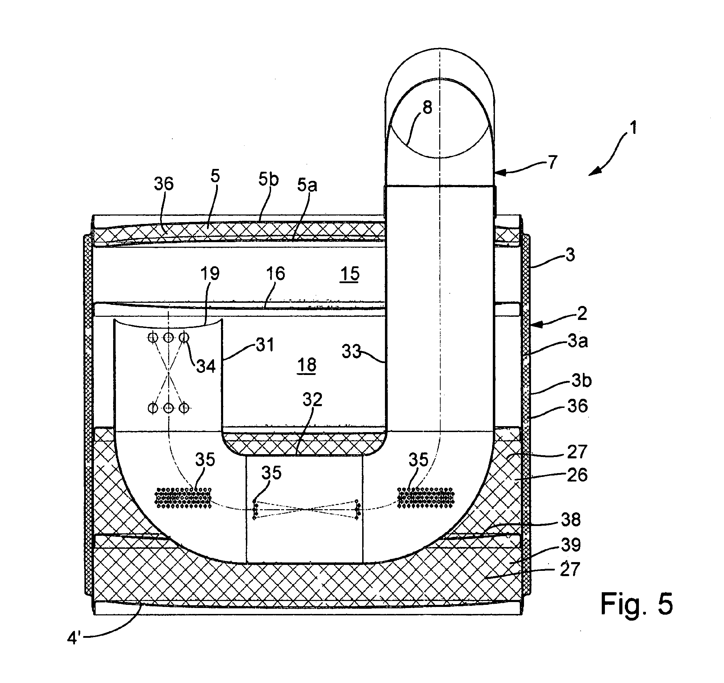

Entsprechend Fig. 1 weist ein erfindungsgemäßer Schalldämpfer 1 ein Gehäuse 2 auf, das insbesondere eine zylindrische Gestalt besitzt. Das Gehäuse 2 umfasst einen Mantel 3 sowie einen Einlaßboden 4 und einen Auslaßboden 5. In Bereich des Einlaßbodens 4, also eingangsseitig ist das Gehäuse 2 mit einem Einlaßtrichter 6 ausgestattet, der sich von einer nicht gezeigten Abgasleitung zum Gehäuse 2 hin aufweitet. Im Bereich des Auslaßbodens 5, also ausgangsseitig ist das Gehäuse 2 mit einem Auslaßrohr 7 ausgestattet, das ebenfalls zu einer Abgasleitung führen kann oder dessen Austrittsende 8 (vgl. Fig. 5) den Abgasaustritt eines nicht gezeigten Abgasstrangs bildet, in den der Schalldämpfer 1 eingebaut ist. Dieser Abgasstrang gehört zu einer Brennkraftmaschine und führt deren Abgase von deren Brennräumen in die Umgebung. Zweckmäßig ist diese Brennkraftmaschine dabei in einem Kraftfahrzeug, insbesondere in einem Nutzfahrzeug, angeordnet.

In den Schalldämpfer 1 ist ein Katalysator 9 integriert. Zu diesem Zweck enthält der Schalldämpfer 1 in seinem Gehäuse 2 wenigstens zwei Katalysatorelemente 10. Im gezeigten bevorzugten Ausführungsbeispiel sind mehrere, hier exemplarisch sechs, Katalysatorelemente 10 vorgesehen, die in ihrer Gesamtheit den Katalysator 9 bilden. Dementsprechend ist der Katalysator 9 in den Fig. jeweils mit einer geschweiften Klammer gekennzeichnet. Diese Katalysatorelemente 10 können als Trägermaterial wahlweise ein Keramik- oder Metall-Substrat aufweisen.

Die Katalysatorelemente 10 sind dabei im Gehäuse 2 so angeordnet, dass sie parallel durchströmbar sind.

Im Gehäuse 2 ist eine Eintrittskammer 11 ausgebildet, der über den Einlaßtrichter 6 die Abgase zugeführt werden. Die Katalysatorelemente 10 sind mit ihren Eintrittsenden 12 jeweils an die Eintrittskammer 11 angeschlossen. Im vorliegenden Fall durchdringen die Katalysatorelemente 10 mit ihren Eintrittsenden 12 eine Trennwand 13, welche die Eintrittskammer 11 an einer dem Einlaßtrichter 6 gegenüberliegenden Seite verschließt. Dabei sind die Katalysatorelemente 10 durch diese Trennwand 13 hindurchgeführt. Diese Durchführung durch die Trennwand 13 ist dabei gasdicht gestaltet und insbesondere mittels einer hier nicht dargestellten Lötverbindung oder Schweißverbindung realisiert, die ringförmig und geschlossen das jeweilige Katalysatorelement 10 entlang der Trennwand 13 umfasst.

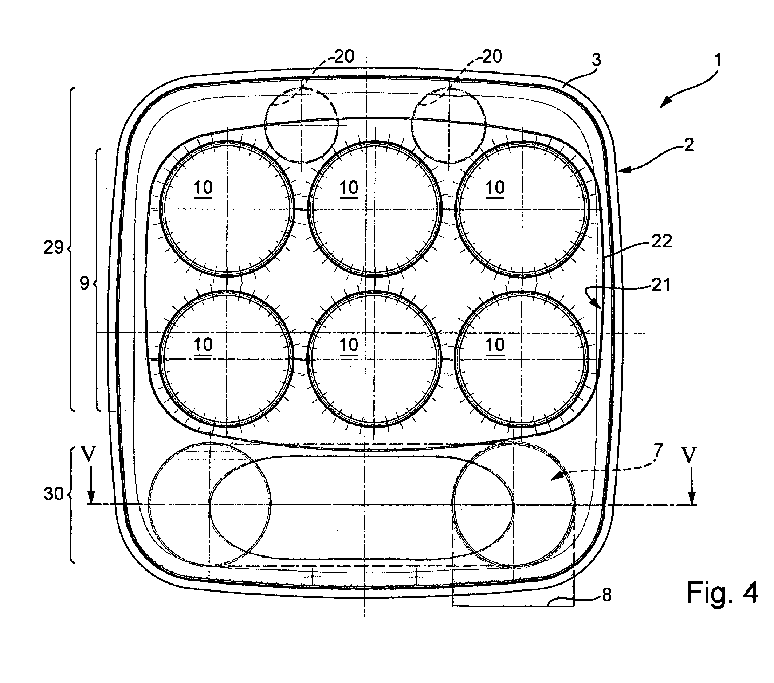

Jedes Katalysatorelement 10 mündet mit seinem jeweiligen Austrittsende 14 in einer Austrittskammer 15, die einerseits vom Auslaßboden 5 und diesem gegenüberliegend von einer weiteren Trennwand 16 begrenzt ist. Die Katalysatorelemente 10 weisen an ihren Austrittsenden 14 jeweils eine ringförmige Perforation 17 auf. Diese Bauweise bewirkt eine Dämpfung von Gaspulsationen in der Austrittskammer 15. Hierdurch gelingt es, die Körperschallanregung am Auslaßboden 5 zu reduzieren. Zwischen den beiden Trennwänden 13 und 16, also zwischen der Eintrittskammer 11 und der Austrittskammer 15 ist eine Sammelkammer 18 angeordnet, in welcher sich ein Eintrittsende 19 (siehe auch Fig. 5) des Auslaßrohrs 7 befindet. Damit das Abgas von der Austrittskammer 15 in die Sammelkammer 18 gelangt, ist die dazwischen angeordnete Trennwand 16 gasdurchlässig, insbesondere perforiert ausgestaltet. Zusätzlich oder alternativ kann diese Trennwand 16 auch mit wenigstens einer Durchgangsöffnung 20 (vgl. Fig. 4) ausgestattet sein.

Erfindungswesentlich ist nun, dass die Eintrittskammer 11 gasdicht ausgestaltet ist, so dass das über den Einlaßtrichter 6 zugeführte Abgas ausschließlich über die Katalysatorelemente 10 wieder aus der Eintrittskammer 11 austreten kann. Durch die gasdichte Ausführung der Eintrittskammer 11 kann das Entweichen von Abgas in die Umgebung des Schalldämpfers 1 sowie eine Umgehung der Katalysatorelemente 10, also ein Entweichen in die Sammelkammer 18 vermieden werden. Eine solche hermetisch dichte Eintrittskammer 11 ist für eine bevorzugte Anwendungsform des Schalldämpfers 1 von besonderer Bedeutung, nämlich dann, wenn der darin integrierte Katalysator 9 als SCR-Katalysator ausgestaltet ist und zur Umwandlung von Harnstoff oder Ammoniak dient, das stromauf des Schalldämpfers 1 in den Abgasstrang eingebracht wird. Zur Ausgestaltung eines SCR-Katalysators 9 werden dementsprechend SCR-Katalysatorelemente 10 verwendet.

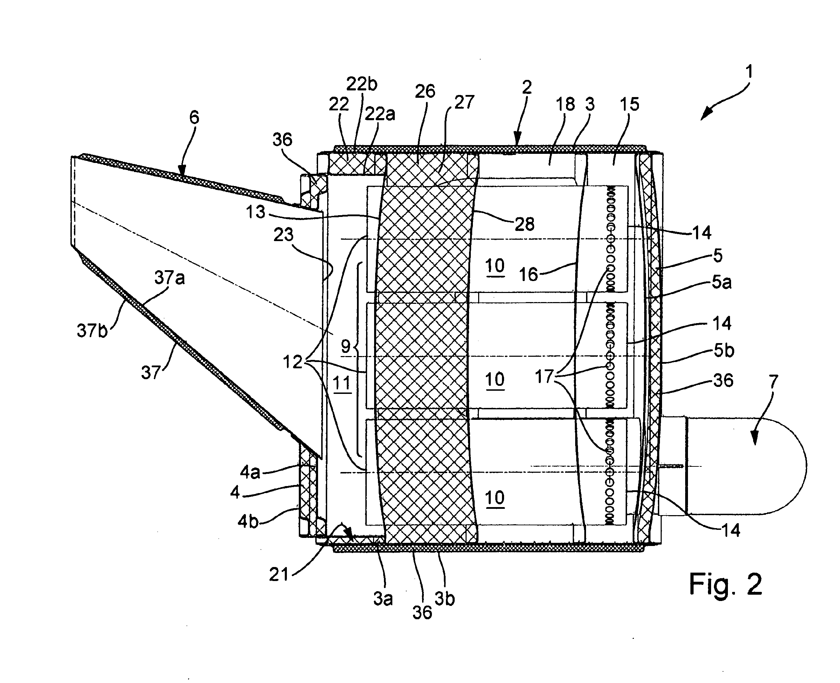

Mit Hilfe der vorstehend genannten Additive können durch die SCR-Technik, also durch selektive katalytische Reaktion oder Reduktion die NOₓ-Anteile im Abgas zu H₂O und N₂ reduziert werden. Damit dieser SCR-Katalysator 9 besonders effektiv arbeitet und der zugemischte Harnstoff bzw. das zugemischte Ammoniak nicht in die Umgebung gelangt, ist bei der Erfindung die Eintrittskammer 11 leckagefrei ausgestaltet. Erreicht wird dies beispielsweise dadurch, dass bei den Ausführungsformen der Fig. 1 und 2 der Einlaßtrichter 6 mit wenigstens einer ringförmig und geschlossen entlang des Einlaßbodens 4 umlaufenden, hier nicht gezeigten Schweißverbindung oder Lötverbindung mit dem Einlaßboden 4 verbunden ist. Des weiteren ist auch die zwischen Eintrittskammer 11 und Sammelkammer 18 angeordnete Trennwand 13 ringförmig geschlossen umlaufend nach außen abgedichtet.

Bei den Ausführungsformen der Fig. 1 und 2 ist die Eintrittskammer 11 in einem separaten Eintrittskammergehäuse 21 ausgebildet, das auch im Querschnitt gemäß Fig. 4 erkennbar ist. Dieses separate Eintrittskammergehäuse 21 ist als solches vollständig in das Gehäuse 2 des Schalldämpfers 1 eingesetzt. Das Eintrittskammergehäuse 21 besitzt ebenfalls einen Mantel 22 und ist ausgangsseitig durch die Trennwand 13 verschlossen. Eingangsseitig ist das Eintrittskammergehäuse 21 durch den Einlaßboden 4 verschlossen, der mit dem übrigen Einlaßboden 4' des Gehäuses 2 verbunden, insbesondere dicht darin eingesetzt ist. Zum eingangsseitigen Verschließen des Gehäuses 2 ist somit ein zusätzlicher, entsprechend geformter Einlaßboden 4` erforderlich. Ebenso ist eine Ausführungsform möglich, bei der das Eintrittskammergehäuse 21 und das Gehäuse 2 durch einen gemeinsamen Einlaßboden verschlossen sind und/oder bei der das Eintrittskammergehäuse 21 einen eigenen Auslaßboden aufweist.

Das separat hergestellte Eintrittskammergehäuse 21 lässt sich insbesondere einfach vorfertigen, wodurch die erwünschte Dichtigkeit für die Eintrittskammer 11 relativ preiswert realisierbar ist. Zweckmäßig ist der Einlaßtrichter 6 an dieses Eintrittskammergehäuse 21 angebaut, so dass ein Austrittsende 23 des Einlaßtrichters 6 in der Eintrittskammer 11 mündet.

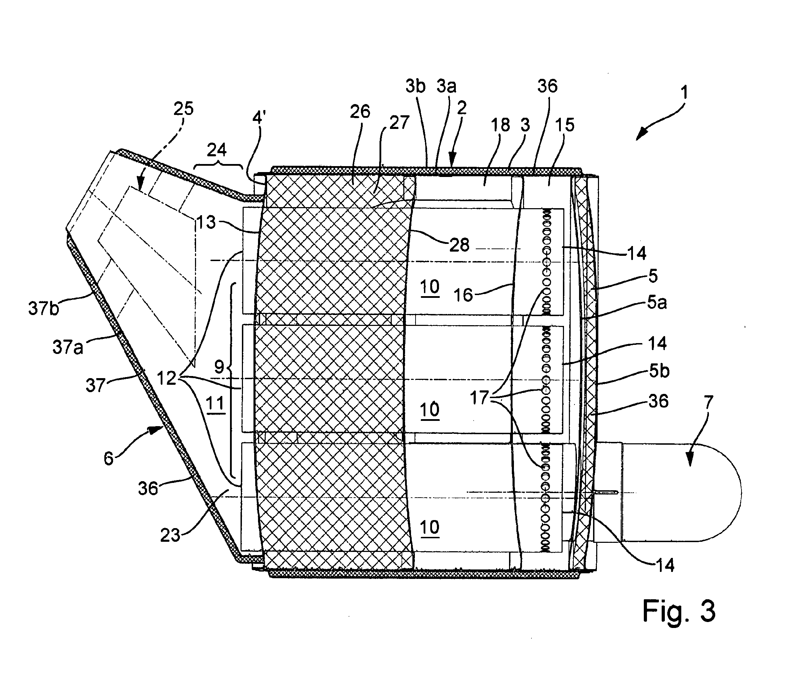

Im Unterschied dazu ist bei der Ausführungsform gemäß Fig. 3 die Eintrittskammer 11 in einem das Austrittsende 23 des Einlaßtrichters 6 enthaltenden Endabschnitt 24 des Einlaßtrichters 6 ausgebildet. Mit anderen Worten, die Katalysatorelemente 10 erstrecken sich mit ihren Eintrittsenden 12 bis zum Austrittsende 23 des Einlaßtrichters 6. Insbesondere kann gemäß Fig. 3 der Einlaßtrichter 6 quasi den Einlaßboden des Eintrittskammergehäuses 21 bilden oder entbehrlich machen. Um hier noch eine hinreichende Aufteilung der den Katalysatorelementen 10 zugeführten Abgasströmung auf die einzelnen Katalysatorelemente 10 bzw. auf deren durchströmbare Querschnitte zu erreichen, kann im Einlaßtrichter 6 optional ein Verteiler- und/oder Mischelement 25 angeordnet sein, das hier mit unterbrochener Linie dargestellt ist. Dieses Verteiler- und/oder Mischelement 25 unterstützt beispielsweise die Aufweitung der ankommenden Abgasströmung und ermöglicht eine möglichst gleichmäßige Anströmung der einzelnen Eintrittsenden 12 der Katalysatorelemente 10. Es ist klar, dass ein derartiges Verteiler- und/oder Mischelement 25 auch bei den Ausführungsformen der Fig. 1 und 2 im Einlaßtrichter 6 angeordnet sein kann.

Bei der Ausführungsform gemäß Fig. 1 ist die Eintrittskammer 11 vergleichsweise großvolumig ausgestaltet, wodurch in der Eintrittskammer 11 eine relativ homogene Vermischung und eine vergleichsweise gleichmäßige Aufteilung der ankommenden Abgase auf die einzelnen Katalysatorelemente 10 realisierbar ist.

Im Unterschied dazu kann bei den Ausführungsformen der Fig. 2 und 3 die Eintrittskammer 11 kleiner dimensioniert sein. Bei diesen Ausführungsformen ist im Gehäuse 2 zusätzlich eine Dämpfungskammer 26 ausgebildet, in der ein durch eine Schraffur angedeutetes Dämpfungsmaterial 27 angeordnet ist. Diese Dämpfungskammer 26 ist z.B. zwischen der Eintrittskammer 11 und der Austrittskammer 15 und außerdem zweckmäßig zwischen der Eintrittskammer 11 und der Sammelkammer 18 angeordnet. Zu diesem Zweck ist eine weitere Trennwand 28 vorgesehen, welche die Sammelkammer 18 von der Dämpfungskammer 26 trennt. Sofern - wie bei der Ausführungsform gemäß Fig. 2 - ein Eintrittskammergehäuse 21 vorgesehen ist, kann sich die Dämpfungskammer 26 innerhalb des Gehäuses 2 außerdem seitlich des Eintrittskammergehäuses 21 bis zum Einlaßboden 4` erstrecken. Dies wird beispielsweise durch eine mehrschichtige Bauweise des Schalldämpfers 2 ermöglicht, was besonders deutlich aus Fig. 4 hervorgeht. Dort ist das Gehäuse 2 zumindest im Bereich des Eintrittskammergehäuses 21 in zwei Ebenen, nämlich in eine Katalysatorebene 29 und in eine Auslaßrohrebene 30, unterteilt. Innerhalb der Katalysatorebene 29 ist der Katalysator 9 bzw. sind dessen Katalysatorelemente 10 angeordnet, während in der Auslaßrohrebene 30 das Auslaßrohr 7 angeordnet ist. Gemäß Fig. 4 erstreckt sich das Auslaßrohr 7 somit unterhalb des Katalysators 9 bzw. unterhalb der Katalysatorelemente 10 und somit auch unterhalb des Eintrittskammergehäuses 21, sofern ein solches vorhanden ist. Durch diese Bauweise ergibt sich eine größere Freiheit für die Gestaltung und Verlegung des Auslaßrohrs 7, so dass dieses insbesondere hinsichtlich seiner Länge optimiert werden kann.

Entsprechend Fig. 5 erstreckt sich das Auslaßrohr 7 beginnend an seinem Eintrittsende 19 mit einem ersten Abschnitt 31 in der Sammelkammer 18, in einem zweiten Abschnitt 32 in der Dämpfungskammer 26 und mit einem dritten Abschnitt 33 wieder in der Sammelkammer 18 sowie in der Austrittskammer 15, von wo aus das Auslaßrohr 7 aus dem Gehäuse 2, durch den Auslaßboden 5 austritt und am Austrittsende 8 endet. Der in der Sammelkammer 18 angeordnete und das Eintrittsende 19 aufweisende erste Abschnitt 31 ist mit einer Perforation 34 versehen, die hier mit wenigen Durchbrüchen schematisch angedeutet ist. Diese Perforation 34 ermöglicht die Einströmung von Abgas aus der Sammelkammer 18 in das Auslaßrohr 7 zusätzlich zum offenen Eintrittsende 19. Das Eintrittsende 19 ist dabei relativ nahe an der Trennwand 16 zwischen Sammelkammer 18 und Austrittskammer 15 positioniert, wodurch eine besonders große Auslaßrohrlänge erzielbar ist, was die Dämpfungswirkung des Schalldämpfers 1 im tieffrequenten Bereich verbessert.

Des weiteren ist auch der sich in der Dämpfungskammer 26 erstreckende zweite Abschnitt 32 des Auslaßrohrs 7 mit einer Perforation 35 versehen, die ebenfalls nur durch einige Durchbrüche angedeutet ist. Bemerkenswert ist hierbei, dass die Perforation 35 des Auslaßrohrs 7 in der Dämpfungskammer 26 nicht für einen Gasaustausch dient, sondern für einen Schallaustritt aus dem Auslaßrohr 7 in die Dämpfungskammer 26 vorgesehen ist. Auf diese Weise kann der im Abgas mitgeführte Luftschall in die Dämpfungskammer 26 und dort in das Dämpfungsmaterial 27 eindringen, wodurch sich eine effektive Bedämpfung des Luftschalls erzielen lässt. Entsprechend ihrer unterschiedlichen Funktionen sind die Perforationen 34 und 35 der beiden Rohrabschnitte 31 und 32 unterschiedlich dimensioniert. So sind die Öffnungsquerschnitte bei der Perforation 34 des ersten Rohrabschnitts 31 innerhalb der Sammelkammer 18 größer dimensioniert als diejenigen der Perforation 35 des zweiten Rohrabschnitts 32 innerhalb der Dämpfungskammer 26.

Der erfindungsgemäße Schalldämpfer 1 besitzt außerdem eine reduzierte Körperschallabstrahlung nach außen sowie einen verbesserten Wärmehaushalt. Erreicht wird dies durch eine doppelwandige Ausführung des Gehäuses 2. Insbesondere ist der Mantel 3 doppelwandig, also mit zwei Einzelwänden 3a und 3b ausgestaltet, wobei zwischen den Einzelwänden 3a, 3b eine Isolationseinlage 36 angeordnet ist. Diese Isolationseinlage 36 dient hauptsächlich zur thermischen Isolierung und kann zusätzlich schalldämpfend ausgestaltet sein. Analog dazu ist auch der Einlaßboden 4 doppelwandig, also mit zwei Einzelwänden 4a und 4b ausgestaltet. Dabei ist auch zwischen den Einzelwänden 4a und 4b des Einlaßbodens 4 eine entsprechende Isolationseinlage 36 eingebracht. In entsprechender Weise ist auch der Auslaßboden 5 doppelwandig ausgestaltet, wobei zwischen den Einzelwänden 5a und 5b des Auslaßbodens 5 ebenfalls eine entsprechende Isolationseinlage 36 eingebracht ist. Entsprechend den Fig. 1 und 2 ist auch der Mantel 22 des Eintrittskammergehäuses 21 doppelwandig ausgestaltet. Zwischen den Einzelwänden 22a und 22b des Mantels 22 befindet sich dann wieder eine entsprechende Isolationseinlage 36. Gemäß den Fig. 1 bis 3 ist des weiteren der Einlaßtrichter 6 doppelwandig ausgestaltet, so dass ein Mantel 37 des Einlaßtrichters 6 zwischen seinen Einzelwänden 37a und 37b wieder eine geeignete Isolationseinlage 36 aufnimmt.

Entsprechend den Fig. 1 und 5 kann das Gehäuse 2 neben dem Eintrittskammergehäuse 21, also im wesentlichen in der Auslaßrohrebene 30 eine weitere Kammer 39 enthalten, die von der dazu benachbarten Dämpfungskammer 26 durch eine weitere Trennwand 38 getrennt ist. Bei dieser zusätzlichen Kammer 39 kann es sich um eine weitere Dämpfungskammer handeln, die dementsprechend mit Dämpfungsmaterial 27 gefüllt sein kann. Die Trennwand 38 kann perforiert sein. Sie dient im wesentlichen zur Lagefixierung des Auslaßrohrs 7 sowie des Eintrittskammergehäuses 21 im Gehäuse 2.

Der erfindungsgemäße Schalldämpfer 1 mit integriertem Katalysator 9 arbeitet wie folgt:

Im Betrieb der Brennkraftmaschine strömen die Abgase durch den Einlaßtrichter 6 in die Eintrittskammer 11 ein. Dabei können die Abgase bei einer bevorzugten Anwendung mit Harnstoff oder mit Ammoniak angereicht sein. In der Eintrittskammer 11 verteilen sich die Abgase möglichst gleichmäßig auf die Eintrittsenden 12 der Katalysatorelemente 10. Da die Eintrittskammer 11 erfindungsgemäß leckagefrei ausgestaltet ist, besteht für die Abgase keine andere Möglichkeit, die Eintrittskammer 11 zu verlassen. Somit durchströmen sämtliche Abgase die Katalysatorelemente 10.

Durch die Katalysatorelemente 10 gelangen die Abgase in die Austrittskammer 15. Von der Austrittskammer 15 gelangen die Abgase durch die Trennwand 16 in die Sammelkammer 18. Von der Sammelkammer 18 gelangen die Abgase durch das Eintrittsende 19 sowie durch die Perforation 34 in das Auslaßrohr 7. Durch das Auslaßrohr 7 werden die Abgase aus dem Gehäuse 2 herausgeführt. Die Perforation 35 innerhalb der Schalldämpfungskammer 26 ermöglicht dabei einen Schallaustrag in das Dämpfungsmaterial 27, wodurch insbesondere höhere Störfrequenzen absorbiert werden.

## Patentansprüche

1. Schalldämpfer mit integriertem Katalysator (9) für einen Abgasstrang einer Brennkraftmaschine, insbesondere in einem Kraftfahrzeug,
- mit einem Gehäuse (2), das eingangsseitig einen Einlaßtrichter (6) und ausgangsseitig ein Auslaßrohr (7) aufweist,
- wobei im Gehäuse (2) wenigstens zwei durchströmbare Katalysatorelemente (10) angeordnet sind,
- wobei das oder die Katalysatorelemente (10) mit einem Eintrittsende (12) in einer Eintrittskammer (11) und mit einem Austrittsende (14) in einer Austrittskammer (15) angeordnet sind,
- wobei ein Austrittsende (23) des Einlaßtrichters (6) mit der Eintrittskammer (11) kommuniziert,
- wobei die Eintrittskammer (11) nach außen sowie gegenüber dem Einlaßtrichter (6) und dem oder den Katalysatorelementen (10) soweit abgedichtet ist, dass im Betrieb der Brennkraftmaschine Abgas, das durch den Einlaßtrichter (6) in die Eintrittskammer (11) gelangt, die Eintrittskammer (11) ausschließlich durch das oder die Katalysatorelemente (10) verlässt,
- wobei die Katalysatorelemente (10) parallel vorgesehen sind, und
- wobei die Eintrittskammer (11) entweder in einem Eintrittskammergehäuse (21) ausgebildet ist, das als separates Bauteil in das Gehäuse (2) eingesetzt ist, oder durch einen das Austrittsende (23) des Einlaßtrichters (6) enthaltenden Abschnitt (24) des Einlaßtrichters (6) gebildet ist.

2. Schalldämpfer nach Anspruch 1,
**dadurch gekennzeichnet,**
**dass** die Austrittskammer (15) durch eine Trennwand (16) mit einer Sammelkammer (18) kommuniziert, wobei ein Eintrittsende (19) des Auslaßrohrs (7) mit der Sammelkammer (18) kommuniziert.

3. Schalldämpfer nach Anspruch 2,
**dadurch gekennzeichnet,**
**dass** die Trennwand (16) zwischen Austrittskammer (15) und Sammelkammer (18) perforiert ist und/oder wenigstens eine Durchgangsöffnung (20) enthält.

4. Schalldämpfer nach Anspruch 2 oder 3,
**dadurch gekennzeichnet,**
**dass** die Sammelkammer (18) zwischen der Eintrittskammer (11) und der Austrittskammer (15) angeordnet ist.

5. Schalldämpfer nach einem der Ansprüche 1 bis 4,
**dadurch gekennzeichnet,**
**dass** im Einlaßtrichter (6) ein Verteiler- und/oder Mischelement (25) angeordnet ist, welches das ankommende Abgas auf das oder die Eintrittsenden (12) des oder der Katalysatorelemente (10) verteilt.

6. Schalldämpfer nach einem der Ansprüche 1 bis 5,
**dadurch gekennzeichnet,**
**dass** jedes Katalysatorelement (10) an seinem Austrittsende (14) eine ringförmige Perforation (17) aufweist.

7. Schalldämpfer nach einem der Ansprüche 1 bis 6,
**dadurch gekennzeichnet,**
- **dass** im Gehäuse (2) eine Dämpfungskammer (26) angeordnet ist, die Dämpfungsmaterial (27) enthält,
- **dass** sich ein perforierter Abschnitt (32) des Auslaßrohrs (7) innerhalb der Dämpfungskammer (26) erstreckt.

8. Schalldämpfer nach Anspruch 7,
**dadurch gekennzeichnet,**
**dass** zumindest ein Teil der Dämpfungskammer (26) zwischen der Sammelkammer (18) und der Eintrittskammer (11) angeordnet ist.

9. Schalldämpfer nach einem der Ansprüche 1 bis 8,
**dadurch gekennzeichnet,**
- **dass** das Eintrittsende (19) des Auslaßrohrs (7) nahe vor der Trennwand (16) zwischen Austrittskammer (15) und Sammelkammer (18) positioniert ist,
- **dass** das Auslaßrohr (7) innerhalb der Sammelkammer (18) perforiert ist.

10. Schalldämpfer nach den Ansprüchen 7 und 9,
**dadurch gekennzeichnet,**
**dass** die Perforation (34) des Auslaßrohrs (7) in der Sammelkammer (18) größere Öffnungsquerschnitte aufweist als die Perforation (35) des Auslaßrohrs (7) in der Dämpfungskammer (26).

11. Schalldämpfer nach einem der Ansprüche 1 bis 10,
**dadurch gekennzeichnet,**
**dass** sich das Auslaßrohr (7) im Gehäuse (2) innerhalb einer anderen Ebene (30) erstreckt als das wenigstens eine Katalysatorelement (10).

12. Schalldämpfer nach einem der Ansprüche 1 bis 11,
**dadurch gekennzeichnet,**
**dass** das wenigstens eine Katalysatorelement (10) ein SCR-Katalysatorelement ist.

13. Schalldämpfer nach einem der Ansprüche 1 bis 12,
**dadurch gekennzeichnet,**
**dass** der Einlaßtrichter (6) und/oder das Gehäuse (2) und/oder das Eintrittskammergehäuse (21) und/oder ein vom Einlaßtrichter (6) durchsetzter Einlaßboden (4) des Gehäuses (2) und/oder ein vom Auslaßrohr (7) durchsetzter Auslaßboden (5) des Gehäuses (2) doppelwandig mit Isolationseinlage (36) ausgestaltet ist.

14. Schalldämpfer nach einem der Ansprüche 1 bis 13,
**dadurch gekennzeichnet,**
**dass** die Eintrittskammer (11) mittels Lötverbindungen und/oder mittels Schweißverbindungen abgedichtet ist, die den Einlaßtrichter (6) und/oder jedes Katalysatorelement (10) und/oder die Eintrittskammer (11) gegenüber dem Gehäuse (2) ringförmig umschließen.

## Claims

1. Silencer with integrated catalytic converter (9) for an exhaust train of an internal combustion engine, in particular in a motor vehicle,
- with a housing (2), which has an inlet funnel (6) on the input side and an outlet pipe (7) on the output side,
- wherein at least two flow-through catalytic converter elements (10) are arranged in the housing (2),
- wherein the catalytic converter element or elements (10) are arranged with one entry end (12) in an entry chamber (11) and with one exit end (14) in an exit chamber (15),
- wherein one exit end (23) of the inlet funnel (6) communicates with the entry chamber (11),
- wherein the entry chamber (11) is sealed off towards the outside and with respect to the inlet funnel (6) and to the catalytic converter element or elements (10) to such an extent that, during operation of the internal combustion engine, exhaust gas which enters the entry chamber (11) via the inlet funnel (6) leaves the entry chamber (11) exclusively via the catalytic converter element or elements (10),
- wherein the catalytic converter elements (10) are provided in parallel, and
- wherein the entry chamber (11) is configured either in a entry chamber housing (21) which is inserted in the housing (2) as a separate component, or is formed by a section (24) of the inlet funnel (6), which section contains the exit end (23) of the inlet funnel (6).

2. Silencer according to Claim 1,
**characterised in that**
the exit chamber (15) communicates via a separating wall (16) with a collection chamber (18), wherein one entry end (19) of the outlet pipe (7) communicates with the collection chamber (18).

3. Silencer according to Claim 2,
**characterised in that**
the separating wall (16) between the exit chamber (15) and the collection chamber (18) is perforated and/or contains at least one through-hole (20).

4. Silencer according to Claim 2 or 3,
**characterised in that**
the collection chamber (18) is arranged between the entry chamber (11) and the exit chamber (15).

5. Silencer according to one of Claims 1 to 4,
**characterised in that**
a distribution and/or mixing element (25) is arranged in the inlet funnel (6), which element distributes the incoming exhaust gas to the entry end or ends (12) of the catalytic converter element or elements (10).

6. Silencer according to one of Claims 1 to 5,
**characterised in that**
each catalytic converter element (10) has an annular perforation (17) at its exit end (14).

7. Silencer according to one of Claims 1 to 6,
**characterised in that**
- a damping chamber (26) is arranged in the housing (2), which damping chamber contains damping material (27),
- a perforated section (32) of the outlet pipe (7) extends within the damping chamber (26).

8. Silencer according to Claim 7,
**characterised in that**
at least a part of the damping chamber (26) is arranged between the collection chamber (18) and the entry chamber (11).

9. Silencer according to one of Claims 1 to 8,
**characterised in that**
- the entry end (19) of the outlet pipe (7) is positioned closely in front of the separating wall (16) between the exit chamber (15) and the collection chamber (18),
- the outlet pipe (7) within the collection chamber (18) is perforated.

10. Silencer according to Claims 7 and 9,
**characterised in that**
the perforation (34) of the outlet pipe (7) in the collection chamber (18) has greater hole cross sections than the perforation (35) of the outlet pipe (7) in the damping chamber (26).

11. Silencer according to one of Claims 1 to 10,
**characterised in that**
the outlet pipe (7) extends on a different plane (30) in the housing (2) than the at least one catalytic converter element (10).

12. Silencer according to one of Claims 1 to 11,
**characterised in that**
the at least one catalytic converter element (10) is an SCR catalytic converter element.

13. Silencer according to one of Claims 1 to 12,
**characterised in that**
the inlet funnel (6) and/or the housing (2) and/or the entry chamber housing (21) and/or an inlet base (4) of the housing (2), which inlet base is penetrated by the inlet funnel (6), and/or an outlet base (5) of the housing (2), which outlet base is penetrated by the outlet pipe (7), has a double-walled configuration with an insulation insert (36).

14. Silencer according to one of Claims 1 to 13,
**characterised in that**
the entry chamber (11) is sealed off by means of soldered connections and/or by means of welded connections which enclose the inlet funnel (6) and/or each catalytic converter element (10) and/or the entry chamber (11) in an annular manner with respect to the housing (2).

## Revendications

1. Silencieux à catalyseur (9) intégré pour un système de gaz d'échappement d'un moteur à combustion interne, notamment dans un véhicule automobile,
- avec un carter (2), comportant côté entrée une trémie d'admission (6) et côté sortie un tube d'évacuation (7),
- au moins deux éléments catalyseurs à circulation (10) étant disposés dans le carter (2),
- le ou les élément(s) catalyseurs (10) étant disposés par une extrémité d'admission (12) dans une chambre d'admission (11) et par une extrémité d'évacuation (14) dans une chambre d'évacuation (15),
- une extrémité d'évacuation (23) de la trémie d'admission (6) communiquant avec la chambre d'admission (11),
- la chambre d'admission (11) étant étanche vers l'extérieur, ainsi que par rapport à la trémie d'admission (6) et au ou aux élément(s) catalyseur(s) (10), de sorte que pendant le fonctionnement du moteur à combustion interne, les gaz d'échappement qui à travers la trémie d'admission (6) arrivent dans la chambre d'admission (11) quittent la chambre d'admission (11) exclusivement à travers l'élément ou les éléments catalyseur(s) (10),
- les éléments catalyseurs (10) étant prévus à la parallèle et
- la chambre d'admission (11) étant réalisée soit dans un carter pour chambre d'admission (21) qui est inséré en tant qu'élément séparé dans le carter (2) ou est formée par un tronçon (24) de la trémie d'admission (6) contenant l'extrémité d'évacuation (23) de la trémie d'admission (6).

2. Procédé selon la revendication 1,
**caractérisé en ce que**,
la chambre d'évacuation (15) communique à travers une paroi de séparation (16) avec une chambre collectrice (18), une extrémité d'admission (19) du tube d'évacuation (7) communiquant avec la chambre collectrice (18).

3. Procédé selon la revendication 2,
**caractérisé en ce que**,
la paroi de séparation (16) est perforée entre la chambre d'évacuation (15) et la chambre collectrice (18) et/ou contient au moins un orifice de passage (20).

4. Silencieux selon la revendication 2 ou 3,
**caractérisé en ce que**
la chambre collectrice (18) est disposée entre la chambre d'admission (11) et la chambre d'évacuation (15).

5. Silencieux selon l'une quelconque des revendications 1 à 4,
**caractérisé en ce que**,
dans la trémie d'admission (6) est disposé un élément distributeur et/ou mélangeur (25) qui distribue les gaz d'échappement affluant sur l'extrémité ou les extrémités d'admission (12) de l'élément ou des éléments catalyseur(s) (10).

6. Silencieux selon l'une quelconque des revendications 1 à 5,
**caractérisé en ce que**,
chaque élément catalyseur (10) comporte sur son extrémité d'évacuation (14) une perforation annulaire (17).

7. Silencieux selon l'une quelconque des revendications 1 à 6,
**caractérisé en ce que**,
- dans le carter (2) est disposée une chambre d'atténuation (26) qui contient de la matière d'atténuation (27),
- **en ce qu'**un tronçon perforé (32) du tube d'évacuation (7) se trouve à l'intérieur de la chambre d'atténuation (26).

8. Silencieux selon la revendication 7,
**caractérisé en ce que**,
au moins une partie de la chambre d'atténuation (26) est disposée entre la chambre collectrice (18) et la chambre d'admission (11).

9. Silencieux selon l'une quelconque des revendications 1 à 8,
**caractérisé en ce que**,
- l'extrémité d'admission (19) du tube d'évacuation (7) est positionnée à proximité de la paroi de séparation (16) entre la chambre d'évacuation (15) et la chambre collectrice (18),
- **en ce que** le tube d'évacuation (7) est perforé à l'intérieur de la chambre collectrice (18).

10. Silencieux selon les revendications 7 et 9,
**caractérisé en ce que**,
la perforation (34) du tube d'évacuation (7) dans la chambre collectrice (18) comporte des sections transversales d'ouverture supérieures à celles de la perforation (35) du tube d'évacuation (7) dans la chambre d'atténuation (26).

11. Silencieux selon l'une quelconque des revendications 1 à 10,
**caractérisé en ce que**,
le tube d'évacuation (7) s'étend dans le carter (2) dans un plan (30) différent de celui du au moins un élément catalyseur (10).

12. Silencieux selon l'une quelconque des revendications 1 à 11,
**caractérisé en ce que**,
le au moins un élément catalyseur (10) est un élément catalyseur SCR.

13. Silencieux selon l'une quelconque des revendications 1 à 12,
**caractérisé en ce que**,
la trémie d'admission (6) et/ou le carter (2) et/ou le carter de chambre d'admission (21) et/ou un fond d'admission (4) du carter (2) traversé par la trémie d'admission (6) et/ou un fond d'évacuation (5) du carter (2) traversé par le tube d'évacuation (7) est conçu à double paroi, avec un insert isolant (36).

14. Silencieux selon l'une quelconque des revendications 1 à 13,
**caractérisé en ce que**,
l'étanchéité de la chambre d'admission (11) est assurée par des assemblages brasés et ou par des assemblages soudés, qui entourent sous forme annulaire la trémie d'admission (6) et/ou chaque élément catalyseur (10) et/ou la chambre d'admission (11) par rapport au carter (2).
